# EUROPEAN PATENT APPLICATION

(11) **EP 3 402 051 A1**
(43) Date of publication of application: **14.11.2018**
(21) Application number: 17170764.9
(22) Date of filing: 12.05.2017
(51) Int. Cl.: H02K 3/40, H01F 5/06, H01B 3/00, H02K 15/04, H02K 11/40

(54) **ELECTRIC MACHINE WITH SEMI-CONDUCTING LAYER ON WINDING FOR GROUNDING**

(71) Applicant: ABB Schweiz AG, 5400 Baden (CH)
(72) Inventor: SAHLEN, Fredrik, 723 49 Västerås (SE); PAULSSON, Göran, 725 91 Västerås (SE); ISBERG, Peter, 725 92 Västerås (SE)
(74) Representative: Savela, Reino Aleksi

(57) **Abstract**

An electrical machine is provided comprising at least one random wound coil (10) out of a winding wire (1) comprising a conductor (2), and an insulation layer (3) surrounding the conductor (2) along a longitudinal direction thereof. The winding wire (1) comprises a conductive layer (4) surrounding the insulation layer (3) along a longitudinal direction thereof. Due to the conductive layer (4) the coil is grounded and partial discharges and bearing currents are reduced.

## Description

### Technical field

Embodiments disclosed herein relate to an electrical machine, such as an electrical motor.

### Background

A problem in, for instance, a low-voltage motor, in particular variable speed drive (VSD) low-voltage motor is the occurrence of bearing currents. The bearing currents may occur in these types of motors due the fast rising voltage pulses and high switching frequencies of the VSD, which cause current pulses through the bearings. These current pulses cause bearing fluting, which is a rhythmic erosion pattern on the bearing's races, which eventually leads to failure of the bearing.

### Summary of the invention

An objective of the present invention is to address the problem of bearing currents and in particular to remove or at least mitigate bearing currents in various applications. Another objective is to improve various aspects related to winding wires of random-wound coils used in an electrical machine. A particular objective is to provide a highly reliable winding wire of random-wound coils used in various electrical machines, such as motors, while also enabling a cost-efficient production thereof. A particular objective is to ensure reliable use of the winding wire in various applications. Still another particular objective is to ensure a reliable grounding of the winding wire when in use.

These objectives and others are achieved by an electrical machine, such as a low voltage motor, comprising at least one random wound coil with a winding wire comprising a conductor and an insulation layer surrounding the conductor along a longitudinal direction thereof, according to the appended independent claim, and by the embodiments according to the dependent claims.

The objective is according to an aspect achieved by an electrical machine comprising at least one random-wound coil with a winding wire comprising a conductor, and an insulation layer surrounding the conductor along a longitudinal direction thereof.

The winding wire comprises a conductive layer surrounding the insulation layer along a longitudinal direction thereof, wherein the conductive layer is grounded.

The grounded conductive layer enables proper grounding of the winding wire and encloses the electric field inside the insulation layer. A capacitive coupling between the winding and rotor is thereby efficiently reduced, whereby bearing currents can be mitigated. By avoiding or at least mitigating the bearing currents, premature bearing failures can be avoided.

In different embodiments, the conductive layer has a volume resistivity in the range of 0 - 10000 ohm cm, such as in the range of 1 - 1000 ohm cm, or in the range of 10 - 100 ohm cm.

In various embodiments, the conductive layer is made of a semi-conductive material, for instance a polymer matrix filled with conductive additives, such as carbon based particles (carbon black, graphene, carbon nanotubes) or metal/metal oxide particles or other conductive materials, where the polymer matrix preferably consists of the same polymer as the insulation layer enabling good adhesion between the conductive layer and the insulation layer.

In variations of the above embodiment, the conductive layer of the winding wire is grounded through a stator frame of the electrical machine, the conductive layer of the winding wire encapsulating an electrical field within the insulation layer. This efficiently eliminates the capacitive coupling between the stator winding coil and a stator frame and a rotor of the electrical machine. One of the major causes and driving forces for creating bearing currents is thereby eliminated.

In an embodiment, the electrical machine is a low voltage motor.

In various embodiments, the electrical machine comprises a slot-liner made of an electrically conducting material. The slot-liner material may, in various embodiments, have a volume resistivity within a range of 1 - 1000 ohm cm. A volume resistivity selected within this range was found to give sufficient grounding of the winding wires while not risk short-circuiting stator laminates.

In various embodiments, the at least one random wound coil is impregnated by an impregnation resin comprising an electrically conductive additive. In some embodiments, the resin has a volume resistivity in the range of 1 - 10 000 ohm cm.

In various embodiments, the electrical machine comprises a variable speed drive. The use of variable speed drives in e.g. electrical motor applications increases although being known to be a source of bearing current flow. The invention enables the use of such variable speed drives without shortened operating time due to bearing failures.

Further features and advantages of the embodiments of the present teachings will become clear upon reading the following description and the accompanying drawings.

### Brief description of the drawings

Figure 1 illustrates in a cross-sectional view a winding wire according to the invention.
Figure 2 is a flow chart showing steps of a method for manufacturing a winding wire.
Figure 3 illustrates a winding wire in shape of a coil.
Figure 4 illustrates part of a random-wound stator.
Figure 5 illustrates a motor.

### Detailed description

In the following description, for purposes of explanation and not limitation, specific details are set forth such as particular architectures, interfaces, techniques, etc. in order to provide a thorough understanding. In other instances, detailed descriptions of well-known devices, circuits, and methods are omitted so as not to obscure the description with unnecessary detail. Same reference numerals refer to same or similar elements throughout the description.

Briefly, according to the invention, an electrical machine is provided comprising at least one random wound coil with a winding wire comprising a conductor, and an insulation layer surrounding the conductor along a longitudinal direction thereof. The winding wire is provided with a conductive layer surrounding the insulation layer along a longitudinal direction thereof, wherein the conductive layer is grounded. Electrical motors are applications in which valuable advantages can be obtained by means of the winding wire having a grounded outer conductive layer. In particular, by grounding the outer conductive layer of the winding wire, the capacitive coupling between winding wire and a rotor of the electrical machine is reduced to a high extent, whereby bearing currents can be mitigated. The electrical machine may comprise a stator comprising the at least one random-wound coil, and the winding wire with the conductive layer may be grounded by being in electrical contact with the stator.

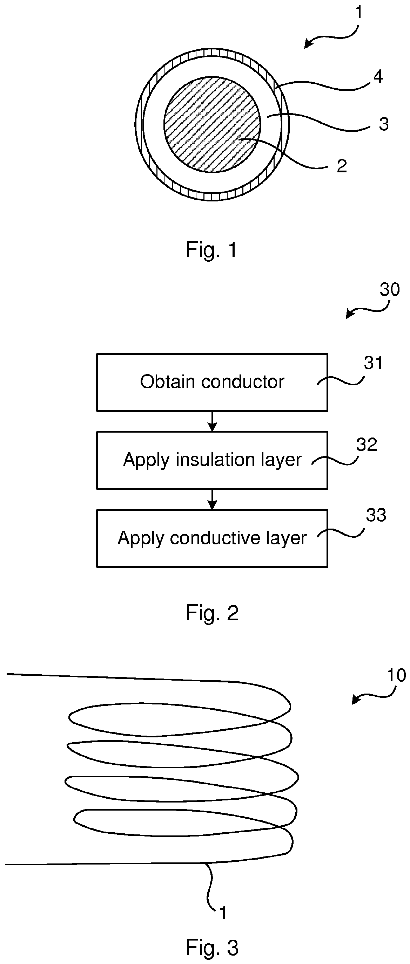

Figure 1 illustrates in a cross-sectional view a winding wire according to an aspect of the invention. The winding wire 1 comprises an electrical conductor 2 in the form of a wire, in particular a metal wire made preferably of a pure metal, such as, for instance, copper or aluminum. The winding wire 1 may have a circular cross section, which facilitates the desired manufacturing by using random-wound technology. A circular cross-section is preferred in order to minimize the electric field across the insulation layer, but it is noted that the cross section of the winding wire 1 may have also other shapes. In the case of a circular cross section the cross section has a diameter within the range of 0.5 to 5 mm, such as within the range of 1 to 2 mm. In the case of a cross section in another shape, the cross section has a maximum linear dimension within the range of 0.5 to 5 mm, such as within the range of 1 to 2 mm.

The winding wire 1 comprises an insulation layer 3 surrounding the conductor 2 in the longitudinal direction thereof. The thickness of the insulation layer 3 may, for instance, be about 100 - 200 µm (also denoted microns). However, the insulation thickness may be selected and adapted in dependence on the applied voltage during operation. The insulation layer 3 is made of a material with a high dielectric strength, i.e. the material should have a high ability to withstand the maximum electrical field without failure of its insulating properties. An insulating material fulfilling these requirements is high performance thermoplastic, which has high thermo-mechanical properties, such as e.g. polyetheretherketons (PEEK), polyetherimides (PEI), polyetherketons (PEK), polyphenylensulfide (PPS), polyphenylensulphone (PPSU), polysulphone (PSU), polyethersulphone (PES), polytetrafloroetylene (PTFE) or polyvinylidenfloride (PVF). The requirement on high dielectric strength also enables keeping the insulation layer 3 thin. The dielectric strength of the insulation layer 3 may, for instance, be about 10 kV/mm and its thickness may, for instance, be about 100 µm.

The mechanical properties of the insulation layer 3 have to be such that the insulation layer 3 is kept intact even during mechanical stress. No defects can be allowed to appear therein due to mechanical stress that might occur when, for instance, bending the winding wire 1 into a coil. To avoid these defects it is necessary to have good adhesion between the conductor 2 and the insulation layer 3 as well as between the insulation 3 and the conductive layer 4. This requirement is met, for instance, by the earlier mentioned materials PEEK and PEI.

It is noted that more than one insulation layer 3 may be applied, i.e. the winding wire 1 may comprise an insulation system comprising two or more insulation layers. However, material costs and the geometric dimensions of the winding wire in use (e.g. as coil) can be kept down when using a single insulation layer. In the various described embodiments, an insulation system comprising a single insulation layer 3 is used as an illustrative example.

As mentioned earlier, the winding wire 1 is provided with a conductive layer 4. The conductive layer 4 may also be denoted an outer screen or outer conductive layer. The conductive layer 4 may comprise a semi-conductive material, such as e.g. a polymer matrix filled with conductive additives, such as carbon based particles (e.g. carbon black, graphene, carbon nanotubes) or metal/metal oxide particles or other conductive materials. Preferably, the polymer matrix consists of the same polymer as the insulation layer enabling good adhesion between the conductive layer and the insulation layer. The conductive layer 4 is arranged such as to surround the insulation layer 3 in the longitudinal direction thereof, the outer conductive layer 4 hence also surrounding the conductor 2. The conductive layer 4 may, for instance, be in the range of 10-100 microns thick, preferably about 25 - 50 microns thick, and have a volume resistivity in the range of 0 - 10 000 ohm cm, such as in the range of 0 - 1000 ohm cm, 0.1 - 1000 ohm cm, 1 - 1000 ohm cm, or 10 - 100 ohm cm. The conductivity of the conductive layer 4 enables proper grounding of the winding wire 1 and encloses the electric field inside the insulation layer 3. The electrical field is thereby encapsulated inside the insulation layer, whereby the capacitive coupling between the winding wire 1 and the rotor is effectively reduced leading to that bearing currents are mitigated.

The winding wire 1 is suitable for coils in a variety of applications, e.g. for low voltage motors and traction motors. For the winding wire 1 to be used in these applications, the thermal properties of the insulation layer 3 has to meet current IEC thermal class 180°C for industrial motors, and at least thermal class 200°C for traction motors. The low voltage motor and traction motor applications are, as noted, high temperature applications (e.g. at least 180°C), and require high performance thermoplastics in the insulation layer, such as the mentioned PEEK or PEI.

As noted earlier, the insulation layer 3 has to be free from defects. The coating technology that is currently used cannot be used for manufacturing the insulation layer 3, since this coating technology always introduces pinholes in the insulation layer. Such pinholes would enable flow of current through the insulation layer 3, i.e. from the conductor 2 to the conductive layer 4.

Figure 2 is a flow chart showing steps of a method for manufacturing a winding wire for a random-wound stator which addresses inter alia the above issue.

In step 31, a conductor 2 is obtained. The conductor 2 may, for instance, be produced by wire drawing, wherein a metal material is drawn through a series of dies of decreasing size. In other embodiments, the metal wire is produced by extrusion. It is noted that other metalworking processes may be used or the conductor wire may be purchased from an external source.

In step 32, the insulation layer 3 is applied to the conductor 2. In contrast to the conventionally used coating baths for applying the insulation layer, the method 30 for manufacturing the winding wire 1 according to the present invention preferably utilizes extrusion. This is preferred in order to ensure that the insulation layer 3 is free from defects. However, the insulation layer 3 may be applied in other manners as well, e.g. by powder coating, provided that the requirement of a defect free insulation layer can be fulfilled.

In some embodiments, the conductive layer 4 is also applied in step 32. Step 32 then comprises co-extruding the insulation layer 3 and the conductive layer 4.

In other embodiments, only the insulation layer 3 is applied in step 32 and in step 33, the conductive layer 4 having a volume resistivity in the range of 0 - 10000 ohm cm is applied.

The insulation layer 3 and the outer conductive layer 4 may thus, in different embodiments, be extruded consecutively or in a co-extrusion process. In preferred embodiments, the insulation layer 3 and the outer conductive layer 4 are co-extruded shaping the insulation layer 3 and outer conductive layer 4 simultaneously, as this is believed to give the highest quality.

In various other embodiments, the outer conductive layer 4 may be applied by coating, by painting or by spraying.

Figure 3 illustrates a winding wire 1 in the shape of a coil 10. By providing the winding wire 1 with the conductive layer 4, the winding wire 1 can be used in random-wound technologies to produce e.g. a coil 10 for, for instance, the mentioned low-voltage motor and traction motor applications.

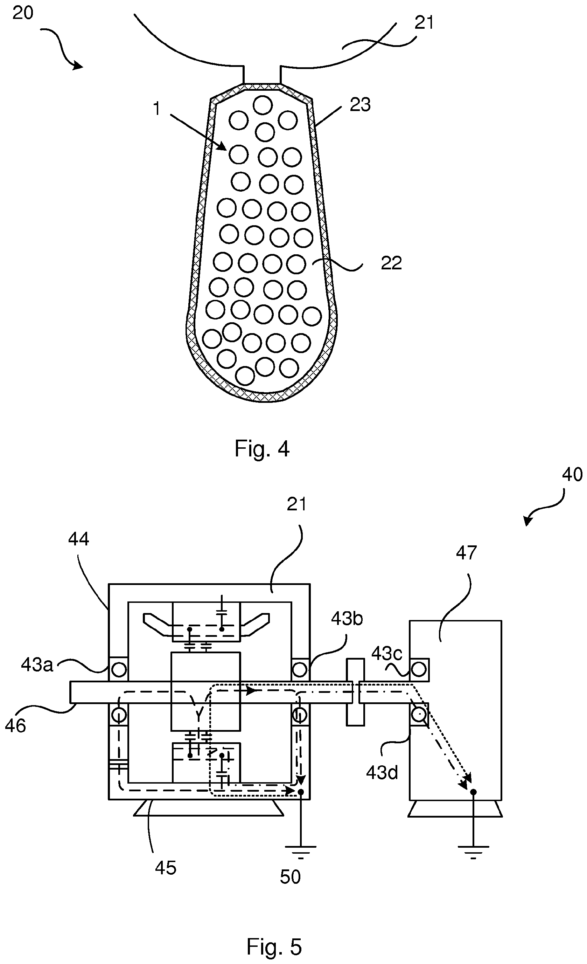

Figure 4 illustrates part of a random-wound stator 20. The random-wound stator 20 comprises a stator frame 21 and a number of coils, each coil having a number of turns of the winding wire 1. The winding wire turns have a random location in the random-wound stator 20, i.e. the coils are random-wound. The coils are arranged in stator slots 22, which in turn are provided with slot liners 23.

In current insulation systems a so-called slot-liner is a part of the insulation system for random-wound motors, and the material should therefore be electrically insulating. The thickness and material choice of the slot-liner decide the insulating capability. The slot-liner mechanically protects the insulated winding wire from being damaged from contact with stator laminations.

In contrast, when using a winding wire 1 according to the invention, the slot-liner is not needed for electrical insulation. However, the slot-liner is still needed, but only for mechanically protecting the outer conductive layer of the grounded winding wire 1. This slot-liner can be made much thinner compared to current slot-liners, but still being stiff for easy handling. More importantly the slot-liner should be made conductive to secure sufficient grounding of the winding wire 1 to a stator core. The volume resistivity may be selected in view of not short circuiting the stator laminates but to still give sufficient grounding of the winding wires 1. The volume resistivity may, for instance, be within the range of 1 to 1000 ohm cm.

The winding wire 1 being provided with the conductive layer 4 provides still further advantages. When a coil winding process has been finished the coils are provided in their application, e.g. in the random-wound stator 20. Thereafter, the winding wire should be sealed against dirt and moisture and the windings should be held in place in a slot 22 to avoid abrasion from vibration. A poorly impregnated random-wound stator may fail due to dirt, oil and moisture that can be partly conductive. Further, the pinholes of the prior art insulation layer may lead to shorted turns and hence failure. According to prior art, this is solved by impregnating the random-wound stator 20 with an electrically insulating impregnation resin.

Currently, the impregnation resin for e.g. random-wound motors is made part of the insulation system, and should hence have a low electrical conductivity. A drawback of this is that the resin has a relatively high thermal resistance for transporting heat away from the conductor to the surrounding environment.

In contrast, by using a grounded winding wire 1 in the insulation system, the resin no longer needs to be electrically insulating. Therefore, an electrically conductive resin can be applied for securing the grounding of the winding wire 1, in particular at the end-winding area, i.e. the part of the winding wire 1 which is not placed in the stator slots (sometimes denoted over-hang area). This can, for instance, be accomplished by filling the resin with a conductive additive such as carbon based particles (carbon black, graphene, carbon nanotubes) or metal/metal oxide particles or other conductive materials. Further, the electrically conductive resin also promotes the thermal conductivity of the resin and hence a better cooling of the winding can be achieved.

As mentioned in the background section, a known problem in a motor, e.g. in a VSD controlled low-voltage motor, is the occurrence of bearing currents.

Figure 5 shows an example on an electrical machine 40 in which the described winding wire 1 may be used. The electrical machine 40 may, for instance, be an electrical motor 40, which is used in the following for describing a particular example. The electrical motor 40 e.g. a random wound low-voltage motor, comprises the earlier described random-wound stator 20 with its stator frame 21 (shown to be grounded at reference numeral 50), stator core 45 and stator core lamination comprising the winding wire 1. The electrical motor 40 further comprises a rotor 44 arranged in the stator frame 21. A first and a second bearing 43a, 43b are shown arranged on a rotor shaft 46, by means of which the rotor 44 can be arranged in the stator frame 21 in a rotatable manner, and at reference numerals 43c, 43d load bearings are indicated. It is noted that, in other embodiments, the stator may be form-wound.

As described in the background section, bearing current is a known problem. The rapid switching in in e.g. a variable speed drive system generates high frequency current pulses through the bearings 43a, 43b. If the energy of these pulses is sufficiently high, metal is transferred from bearing balls and bearing races to the lubricant that is used. This is known as electrical discharge machining (EDM). The effect of a single pulse is insignificant, but a small EDM pit, i.e. an incontinuity, is created, which will collect more pulses and expand into an EDM crater. The switching frequency is, as noted, high and the high number of pulses causes the erosion to quickly accumulate. This reduces the life time of the bearing, which may need to be replaced after only a short time in service.

The source of the bearing currents is the voltage that is induced over the bearings 43a, 43b. In small electrical motors, the internal voltage division of a common mode voltage over internal stray capacitances of the electrical motor 40 may cause shaft voltages that are high enough to create high frequency bearing current pulses. This may happen if the shaft 46 is not earthed via a driven machinery while the motor frame is grounded. A known manner of overcoming bearing currents is to use conventional equipment grounding methods, which are mainly designed to provide a sufficiently low impedance connection to protect the equipment against system frequency fault. The variable speed drive can be grounded at high common mode current frequencies, using e.g. symmetrical multicore motor cables, and by using shielded motor cables thereby defining a short, low impedance path for the common mode current. There are still further known ways and measures to avoid that bearing currents render the bearing design expensive.

The present invention overcomes the problem of bearing currents in a very efficient way, requiring none of the above mentioned measures. By using the described winding wire 1, the total electric field is encapsulated inside the insulation layer 3. The conductive layer 4 of the winding wire 1 is grounded through the stator frame 21, which efficiently eliminates the capacitive coupling between the coil and the stator frame 21. One of the major cause and driving force for creating bearing currents is thereby eliminated.

The solution according to the invention is more cost-efficient than current solutions, which involve expensive bearing designs, involving for instance insulated bearing constructions or damping the high frequency common mode current by dedicated filters. Further, the solution, i.e. using the grounded winding wire 1, also reduces maintenance need. Still further, the bearing design can be made robust and the probability for a bearing failure is highly reduced.

The invention has mainly been described herein with reference to a few embodiments. However, as is appreciated by a person skilled in the art, other embodiments than the particular ones disclosed herein are equally possible within the scope of the invention, as defined by the appended patent claims.

## Claims

1. An electrical machine (40) comprising at least one random wound coil (10) with a winding wire (1) comprising a conductor (2), and an insulation layer (3) surrounding the conductor (2) along a longitudinal direction thereof, **characterized by** a conductive layer (4) surrounding the insulation layer (3) along a longitudinal direction thereof, wherein the conductive layer (4) is grounded.

2. The electrical machine (40) as claimed in claim 1, wherein the conductive layer (4) has a volume resistivity in the range of 0 - 10000 ohm cm, such as in the range of 1 - 1000 ohm cm, or in the range of 10 - 100 ohm cm.

3. The electrical machine (40) as claimed in claim 1 or 2, wherein the conductive layer (4) is made of a semi-conductive material selected among: a polymer matrix filled with conductive additives.

4. The electrical machine (40) as claimed in claim 3, wherein the conductive additives comprise one or more of: carbon based particles, metal particles and metal oxide particles.

5. The electrical machine (40) as claimed in any of claims 1-4, wherein the conductive layer (4) of the winding wire (1) is grounded through the stator frame (21), encapsulating an electrical field within the insulation layer (3).

6. The electrical machine (40) as claimed in any of claims 1-5, comprising a low voltage motor.

7. The electrical machine (40) as claimed in any of claims 1-6, comprising a slot-liner made of an electrically conducting material.

8. The electrical machine (40) as claimed in claim 7, wherein the slot-liner material has a volume resistivity within a range of 1- 1000 ohm cm.

9. The electrical machine (40) as claimed in any of claims 1-8, wherein the at least one random wound coil (10) is impregnated by an impregnation resin comprising an electrically conductive additive.

10. The electrical machine (40) as claimed in claim 9, wherein the resin has a volume resistivity in the range of 1 - 10 000 ohm cm.

11. The electrical machine (40) as claimed in any of claims 1-10, comprising a variable speed drive.
